# EUROPEAN PATENT APPLICATION

(11) **EP 1 971 175 A2**
(43) Date of publication of application: **17.09.2008**
(21) Application number: 08004982.8
(22) Date of filing: 17.03.2008
(51) Int. Cl.: H04Q 7/38

(54) **Method and apparatus for transmitting and receiving a control channel in a mobile communication system**

(30) Priority: 16.03.2007 KR 20070026109
(71) Applicant: Samsung Electronics Co., Ltd., Suwon-si, Gyeonggi-Do (KR)
(72) Inventor: Han, Jin-Kyu, Suwon-si Gyeonggi-do (KR); Heo, Youn-Hyoung, Suwon-si Gyeonggi-do (KR); Cho, Joon-Young, Suwon-si Gyeonggi-do (KR); Kwon, Hwan-Joon, Suwon-si Gyeonggi-do (KR); Lee, Ju-Ho, Suwon-si Gyeonggi-do (KR)
(74) Representative: Lang, Johannes

(57) **Abstract**

A method and apparatus for transmitting a control channel of a base station in a mobile communication system. A downlink control channel signal generator generates a downlink control channel signal to be transmitted to a User Equipment (UE). A control channel candidate processor calculates a control channel decoding attempt order according to a state of the downlink channel. A controller determines a control channel candidate to be used, according to the calculated decoding attempt order. A mapper maps the generated control channel signal to the determined control channel candidate. A transmission processor wirelessly transmits the mapped signal.

## Description

### BACKGROUND OF THE INVENTION

### 1. Field of the Invention

The present invention relates generally to a mobile communication system, and in particular, to a method and apparatus for transmitting and receiving a downlink control channel.

### 2. Description of the Related Art

Mobile communication systems are currently evolving from basic communication devices into high-speed, high-quality wireless packet data communication systems that provide data services and multimedia services beyond the early voice-oriented services. Recently, various mobile communication standards, such as High Speed Downlink Packet Access (HSDPA) and High Speed Uplink Packet Access (HSUPA), both defined by 3^{rd} Generation Partnership Project (3GPP), High Rate Packet Data (HRPD) defined by 3^{rd} Generation Partnership Project-2 (3GPP2), and Institute of Electrical and Electronics Engineers (IEEE) 802.16, have been developed to support the high-speed, high-quality wireless packet data services.

The existing 3^{rd} generation wireless packet data communication system, such as HSDPA, HSUPA and HRPD, uses such technologies as an Adaptive Modulation and Coding (AMC) method and a channel-sensitive scheduling method in order to improve transmission efficiency. With the use of the AMC method, a transmitter can adjust the amount of transmission data according to the channel state. For example, when the channel state is not good, the transmitter reduces the amount of transmission data to match a reception error probability to a desired level, and when the channel state is good, the transmitter increases the amount of transmission data to efficiently transmit a large volume of information while matching the reception error probability to the desired level. Using the channel-sensitive scheduling resource management method, the transmitter, since it selectively services a user having a superior channel state among several users, can increase in the system capacity, as compared with a transmitter that allocates a channel to one user and services the user with the allocated channel. Such capacity increase is commonly referred to as a multi-user diversity gain. In brief, the AMC method and the channel-sensitive scheduling method are methods for receiving partial channel state information being fed back from a receiver, and applying an appropriate modulation and coding technique at the most efficient time determined depending on the received partial channel state information.

Recently, intensive research is being conducted to replace Code Division Multiple Access (CDMA), which is the multiple access scheme used in the 2^{nd} and 3^{rd} generation mobile communication systems, with Orthogonal Frequency Division Multiple Access (OFDMA) in the next generation mobile communication system. 3GPP and 3GPP2 have started standardization work on evolved systems based on OFDMA.

It is known that OFDMA, compared to CDMA, is expected to increase in the capacity, and one of such causes is the possibility of performing scheduling in the frequency domain (Frequency Domain Scheduling). As though capacity gain can be obtained from the time-varying channel characteristic using the channel-sensitive scheduling method, more capacity gain can be obtained using the frequency-varying channel characteristic.

When the AMC method and the channel-sensitive scheduling method are implemented, a base station adaptively allocates given wireless resources, such as frequency, time, power, etc., according to the channel states of users. In such adaptive resource allocation, the base station transmits resource allocation information to a user over a downlink control channel, and the user recognizes which wireless resources are allocated to the user itself, through reception of the downlink control channel.

The allocation of wireless resources can be classified into resource allocation for the downlink, which is transmitted by the base station and received at each user terminal (or User Equipment (UE)), and resource allocation for the uplink, which is transmitted by a UE and received at the base station.

The downlink resource allocation is adaptively achieved according to the channel state reported by a user and the amount of information of the data the base station should transmit to the corresponding user. A downlink control channel is used to indicate to which user and what resources are allocated for data transmission thereto, and also to indicate which modulation and coding scheme is used as a transmission scheme. Based on the information of the downlink control channel, a UE recognizes if downlink resources have been allocated to the UE itself, and if allocated, recognizes through which allocated resources it should receive the transmitted signal.

The uplink resource allocation is adaptively performed based on the channel state reported by a user and the amount of information of desired transmission data. A downlink control channel is used to indicate to which user and which resources are allocated, and also to indicate, with resources allocated, which transmission scheme it should transmit data. Based on the information of the downlink control channel, a UE recognizes if uplink resources have been allocated to the UE itself, and if allocated, recognizes which transmission scheme it should use.

Information included in the downlink control channel for downlink resource allocation is generally as follows.
A) UE IDentification (UE ID): UE ID is information with which a UE determines if there is any signal transmitted to the UE itself. Since a Cyclic Redundancy Code (CRC) based on a particular UE ID is generally inserted into Downlink (DL) control information, if a UE has successfully restored the DL control information, the corresponding control information is recognized as information for the corresponding UE.
B) Downlink Resource Block (DL RB) allocation information: If a UE has successfully restored DL control information, the UE, based on the DL RB information, recognizes over which resource block its actual data is transmitted.
C) Transport Format (TF): TF indicates a modulation and coding scheme of a transmission signal. A UE, if it applies AMC, cannot perform a demodulation and decoding process unless it has information on the TF.
D) Hybrid Automatic Repeat reQuest (HARQ)-related information: An HARQ operation provides a transmitter with information indicating if a receiver has successfully received a transmission packet. If the receiver has successfully received the transmission packet, the transmitter transmits another packet, and if the receiver has failed in the reception, the transmitter retransmits the previous packet. The 'HARQ-related information' is information related to HARQ, and indicates if the transmission signal is an initial-transmission signal or a retransmission signal. Based on the HARQ-related information, a UE determines if it will combine the corresponding packet with the previously received packet and then decode the combined packet, or if it will perform a new decoding operation.

Information included in the downlink control channel for uplink resource allocation is generally as follows.
A) UE ID
B) Uplink Resource Block (UL RB) allocation information: A UE, if it has successfully restored control information, recognizes over which resource block it should transmit data, based on the UL RB information.
C) TF: A UE cannot generate transmission signals according to the demodulation and decoding scheme requested by the base station, unless it has information on the TF to be applied to thereto.

As the mobile communication system evolves into the broadband OFDMA system, the amount of resources, which are the target of the allocation, are constantly increasing. However, since the amount of resources, which is the allocation unit in use, does not increase in proportion thereto, the OFDMA system cannot avoid the increase in the number of simultaneously transmitted downlink control channels, compared to the conventional mobile communication system.

In order to search for a downlink control channel transmitted to a UE itself among several downlink control channels, the UE should attempt blind decoding in a possible search space (or candidate group). A base station can transmit downlink control channel information using one of the control channel candidates defined in a control channel search space. The 'blind decoding' refers to an operation in which a UE receives control channel information without previous information indicating with which control channel candidate the base station transmits the control channel information.

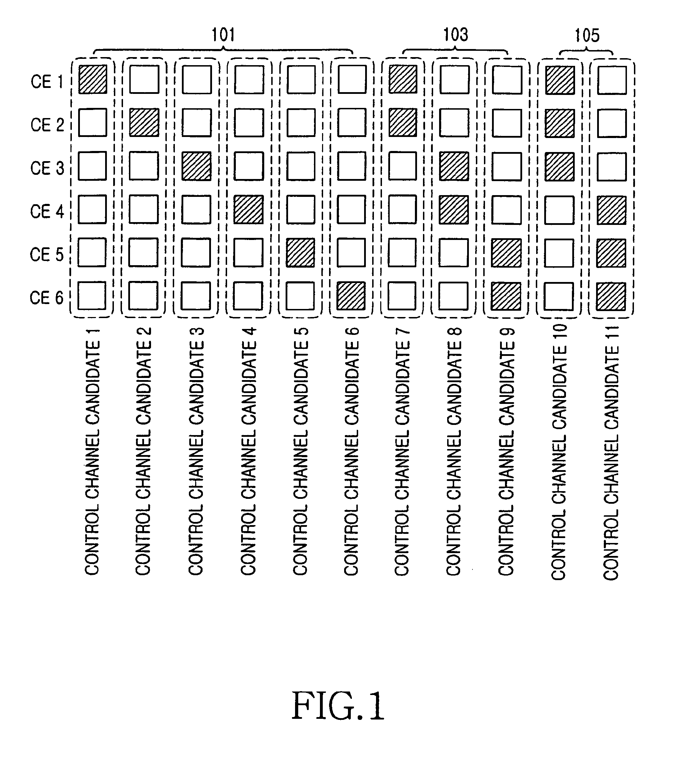

FIG. 1 illustrates an example of a control channel search space according to the prior art. In FIG. 1, a term 'Channel Element (CE)' refers to a unit of logical channels constituting a downlink control channel, and consideration is given to the case where each downlink control channel is composed of one through three CEs.

Each CE is mapped to a Resource Element (RE), which is a unit of a physical channel, on a one-to-one basis, and a downlink control channel is assumed to use one modulation scheme. When a downlink control channel is composed of one CE, the possible number of transmission bits decreases, as compared to when the downlink control channel is composed of two or three CEs, which causes a decrease in a channel coding rate of the downlink control channel.

That is, when the downlink control channel is composed of one CE, it is possible to transmit control information with use of a less amount of resources, but only the UE having a good channel state can successfully receive the control information.

When the downlink control channel is composed of three CEs, even the UE in a poor channel state can successfully receive the control information, but it uses three times the resources as the case where it uses one CE. That is, for efficient resource utilization, it is preferable to make a control channel using fewer CEs for the UE having a good channel state, and make a control channel using more CEs for the UE having a poor channel state.

Referring to FIG. 1, for control channel candidates #1 ~ #6 101, a control channel is composed of one CE; for control channel candidates #7 ~ #9 103, a control channel is composed of two CEs; and for control channel candidates #10 and #11 105, a control channel is composed of three CEs. According to the foregoing, the control channel candidates #1 ~ #6 are used when the UE is in a good channel state, and the control channel candidates #10 and #11 are used when the UE is in a poor channel state.

Defining which control channel candidate every UE will use as a control channel is made using an upper layer message. For example, a certain UE may set control channel candidates #1, #2, #3, #7, and #10 as its search space, and another UE may set control channel candidates #4, #5, #6, #7, and #9 as its search space. If a UE has set all of the 11 control channel candidates illustrated in FIG. 1 as its search space, the UE makes a maximum of 11 decoding attempts. However, a UE, which has set the control channel candidates #1, #2, #3, #7, and #10 as its search space, makes a maximum of 5 decoding attempts. That is, the number of the decoding attempts increases with the size of the search space.

The prior art is characterized in that a search space composed of a plurality of control channel candidates is made, and a UE makes decoding attempts on all the candidates defined in the search space in order to receive the downlink control channel transmitted to the UE itself among these control channel candidates. Since the order of decoding attempts is determined in the control channel search space by the UE itself, the number of decoding attempts increases with the size of the search space, and the maximum number of decoding attempts is coincident with the size of the search space.

The increase in the number of decoding attempts means that the UE consumes more power and performs more calculations until it recognizes resources allocated to the UE itself. Therefore, the prior art reduces the size of the search space in order to reduce the number of decoding attempts. However, the reduction in the size of the search space means a decrease in flexibility of a base station in its resource allocation. The base station transmits a control channel with one of the control channel candidates defined in the control channel search space for each UE. However, if the base station has already determined to use a particular control channel candidate as a control channel to be transmitted to a first UE, the base station cannot use the control channel candidate for the first UE in order to transmit a control channel for a second UE.

Therefore, if a size of the control channel search space for the UE is large, the base station can select one of a plurality of control channel candidates defined in the search space, taking into account resource allocation for several UEs, and transmit the selected control channel, thereby increasing the flexibility of resource allocation.

However, if the size of the search space for a control channel is small, some UEs may never undergo resource allocation according to the resource allocation conditions of other UEs.

Basically, in the prior art, increasing the size of the control channel search space increases the flexibility of resource allocation, but increases the power consumption and calculation of the UE. However, if the number of decoding attempts is reduced by reducing the size of the control channel search space, the power consumption and calculation can be efficiently reduced, but the flexibility of resource allocation may decrease.

### SUMMARY OF THE INVENTION

An aspect of the present invention is to address at least the problems and/or disadvantages and to provide at least the advantages described below. Accordingly, an aspect of the present invention is to provide a method and apparatus for determining a decoding attempt order for control channel candidates in order to reduce the number of decoding attempts of a UE while keeping the large size of the downlink control channel search space.

In accordance with one aspect of the present invention, there is provided a method for transmitting a control channel by a base station in a mobile communication system. The method includes allocating resources to a User Equipment (UE) through scheduling, and generating a downlink control channel signal; calculating a control channel decoding attempt order according to a state of the downlink channel; and determining a control channel candidate to be used, according to the calculated decoding attempt order, and transmitting the generated control channel signal in the determined control channel candidate.

In accordance with another aspect of the present invention, there is provided a method for receiving a control channel by a User Equipment (UE) in a mobile communication system. The method includes calculating a control channel decoding attempt order according to a state of a downlink channel, and decoding a control channel signal from a control channel candidate according to the calculated control channel decoding attempt order.

In accordance with another aspect of the present invention, there is provided an apparatus for transmitting a control channel of a base station in a mobile communication system. The apparatus includes a downlink control channel signal generator for generating a downlink control channel signal to be transmitted to a User Equipment (UE), a control channel candidate processor for calculating a control channel decoding attempt order according to a state of the downlink channel, a controller for determining a control channel candidate to be used, according to the calculated decoding attempt order, a mapper for mapping the generated control channel signal to the determined control channel candidate, and a transmission processor for wirelessly transmitting the mapped signal.

In accordance with yet another aspect of the present invention, there is provided an apparatus for receiving a control channel of a User Equipment (UE) in a mobile communication system. The apparatus includes a control channel candidate processor for calculating a control channel decoding attempt order according to a state of a downlink channel, a reception processor for processing a wirelessly received signal to restore modulation symbols, and a downlink control channel demodulation and decoding unit for decoding a control channel signal from a wirelessly received control channel candidate according to the calculated control channel decoding attempt order.

### BRIEF DESCRIPTION OF THE DRAWINGS

The above and other aspects, features, and advantages of the present invention will become more apparent from the following detailed description when taken in conjunction with the accompanying drawings in which:
- FIG. 1: is a diagram illustrating an example of a control channel search space according to the prior art;
- FIG. 2: is a diagram illustrating an embodiment of explicitly defining a decoding attempt order between candidates while defining a control channel search space;
- FIG. 3: is a flowchart illustrating a method in which a base station transmits a control channel according to an embodiment of the present invention;
- FIG. 4: is a flowchart illustrating a method in which a UE receives a control channel according to an embodiment of the present invention;
- FIG. 5: is a diagram illustrating an embodiment of the present invention;
- FIG. 6: is a flowchart illustrating a method in which a base station transmits a control channel according to an embodiment of the present invention;
- FIG. 7: is a flowchart illustrating a method in which a UE receives a control channel according to an embodiment of the present invention;
- FIG. 8: is a block diagram illustrating a structure of a base station transmitter supporting embodiments of the present invention;
- FIG. 9: is a block diagram illustrating a structure of a UE receiver supporting embodiments of the present invention;
- FIG. 10: is a flowchart illustrating a method in which a base station transmits a control channel according to an embodiment of the present invention;
- FIG. 11: is a flowchart illustrating an operation in which a UE receives a control channel according to an embodiment of the present invention;
- FIG. 12: is a block diagram illustrating a structure of a base station transmitter supporting embodiments of the present invention; and
- FIG. 13: is a block diagram illustrating a structure of a UE receiver supporting embodiments of the present invention

### DETAILED DESCRIPTION OF THE PREFERRED EMBODIMENTS

Preferred embodiments of the present invention will now be described in detail with reference to the annexed drawings. The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the present invention. Also, descriptions of well-known functions and constructions are omitted for clarity and conciseness. Further, terms used herein are defined based on functions in the present invention and may vary according to users, operators' intention or usual practices. Therefore, the definition of the terms should be made based on contents throughout the specification.

The present invention provides a method and apparatus for determining a decoding attempt order between candidates in a control channel search space according to the channel state in order to reduce the number of decoding attempts of a User Equipment (UE) while keeping the large size of the control channel search space, and enabling a base station and a UE to share such determined information.

Herein, the foregoing present invention proposes an embodiment that needs separate signaling in changing a decoding attempt order according to the downlink channel state, and proposes embodiments in which a base station and a UE change a decoding attempt order according to a specific rule without separate signaling.

The embodiments without separate signaling are roughly divided into two types according to the method of determining the state of the downlink channel.

A first method determines the downlink channel state according to whether the recent downlink control channel has been successfully decoded by a UE. That is, when a 1-CE control channel candidate has already been successfully decoded, it is determined that the downlink channel state of the UE is good. When a control signal is decoded from a 3-CE control channel candidate, it is determined that the downlink channel state of the UE is poor.

A second method determines the downlink channel state according to the feedback information transmitted from the UE to the base station.

When the downlink channel state information is acquired with the foregoing two methods, a decoding attempt order is determined according to a rule predetermined between the UE and the base station based on the downlink channel state information, and at this point, the control channel search space can also be redefined together. The two methods are subdivided into two examples according to whether the control channel search space is also redefined together.

A description will first be made of an embodiment that transmits a decoding attempt order through separate signaling according to the downlink channel state.

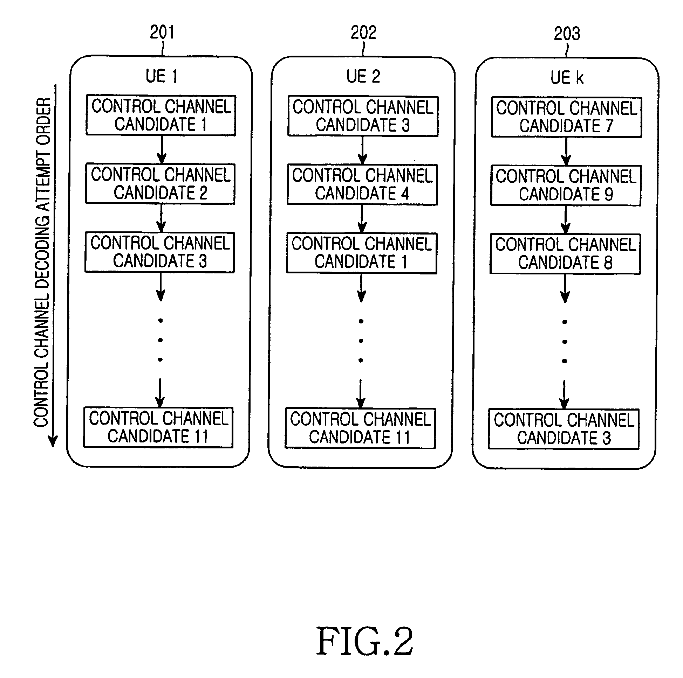

FIG. 2 is a diagram illustrating an embodiment of explicitly (extrinsically) defining a decoding attempt order between candidates while defining a control channel search space.

A UE has its unique downlink control channel search space, and attempts decoding on each control channel candidate defined in the search space in order to receive its own downlink control channel. FIG. 2 illustrates an example where the control channel search space of FIG. 1 is defined for each UE, and UEs #1, #2, ..., #K all have the 11 control channel candidates illustrated in FIG. 1, as a search space. A decoding attempt order is defined together in the control channel search space for each UE. For example, a control channel search space 201 of a UE#1 adopts control channel candidates #1, #2, and #3 as first, second, and third decoding attempt candidates, respectively, while a control channel search space 202 of a UE#2 adopts decoding attempt candidates in order of control channel candidates #3, #4, and #1. Similarly, a UE#K adopts decoding attempt candidates in order of control channel candidates #7, #9, and #8.

Assuming that the UE#1 and the UE#2 should simultaneously transmit downlink control channels after undergoing resource allocation, and they are safe in using control channel candidates #1 ~ #6 as they are both in the good channel state, if the base station uses the control channel decoding attempt order for the purpose of reducing the number of decoding attempts of the UE, the base station will transmit control information for the UE#1 using a control channel candidate #1, i.e., CE #1, and transmit control information for the UE#2 using a control channel candidate #3, i.e., CE #3. When the control channel is made in this manner, the UE#1 and the UE#2 both can obtain control information with the first decoding. When another UE has previously occupied the control channel candidate #1, the base station may transmit a control signal to the UE#1 using a control channel candidate #2 in order to reduce the number of decoding attempts. In this case, the UE#1 can obtain control information only with 2 decodings.

If the decoding attempt order has not been previously defined as described above, it is impossible to make the control channel considering the number of decoding attempts since the base station has no information about a control channel candidate that it should make a control channel with in order to reduce the number of decoding attempts of the UE.

Therefore, in order to reduce the number of decoding attempts as described above, an embodiment of the present invention allows the base station to previously define a decoding attempt order for each UE and then transmit the defined decoding attempt order to the UE, and enables the base station and the UE to transmit or decode control information according to the predetermined decoding attempt order.

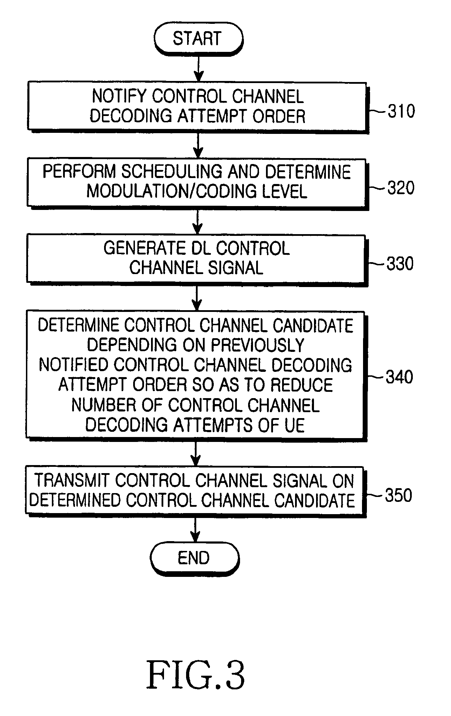

FIG. 3 is a flowchart for a description of a method in which a base station transmits a control channel according to an embodiment of the present invention. Referring to FIG. 3, in step 310, a base station determines a control channel decoding attempt order illustrated in FIG. 2, and notifies it to each UE. Although not shown in the drawing, the base station can also transmit the control channel search space rearranged according to the control channel decoding attempt order to each UE. In step 320, the base station allocates resources to each UE through scheduling, and determines a modulation/coding level to be used. In step 330, the base station generates a downlink (or DL) control channel signal. In step 340, the base station determines a control channel candidate to be used, taking into account the control channel decoding attempt order notified in step 310, in order to reduce the number of control channel decoding attempts of the UE. That is, in the case illustrated in FIG. 2, the base station uses a control channel candidate #1 for the UE#1, and uses a control channel candidate #3 for the UE#2. In step 350, the base station transmits the generated control channel signal on the control channel candidate determined in step 340.

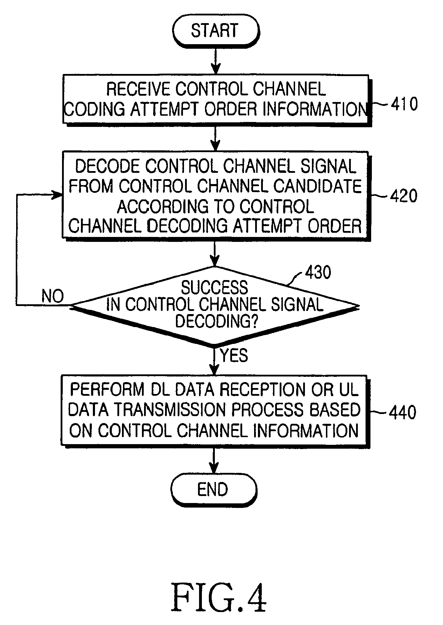

FIG. 4 is a flowchart illustrating a method in which a UE receives a control channel according to an embodiment of the present invention. Referring to FIG. 4, in step 410, a UE receives control channel decoding attempt order information from a base station. Although not shown the drawing, the UE can also receive, from the base station, control channel search space information rearranged according to the control channel decoding attempt order. In step 420, the UE decodes a control channel signal from a control channel candidate according to the control channel decoding attempt order. In step 430, the UE determines if the control channel signal has been successfully decoded. If it is determined in step 430 that the UE has succeed in the control channel signal decoding, the UE performs a downlink data reception or uplink data transmission process based on the control channel information in step 440. However, if it is determined in step 430 that the UE has failed in the control channel signal decoding, the UE re-performs step 420.

The foregoing embodiment, after first setting the control channel decoding attempt order, does not automatically change it every time the channel state of the control channel is changed. However, for example, for the UE#1 of FIG. 2, a decoding attempt priority of a 1-CE control channel candidate is set high, and when the UE#1 is in a good channel state, the set decoding attempt order is preferable, since it is advantageous to use the 1-CE control channel candidate.

However, if the UE#1 transitions to a poor channel state as it moves around, it increases in the number of decoding attempts since the decoding attempt order is fixed although it is advantageous to use a more-than-one-CE control channel candidate.

Therefore, there is a need to redefine the decoding attempt order according to the change in the channel state. Thus, in the above described embodiment, when it is determined that there is a need to change the control channel decoding attempt order, the base station transmits the changed control channel decoding attempt order to the UE through separate signaling.

Next, a description will be made of embodiments determining a downlink channel state which is a criterion for changing a control channel decoding attempt order, based on the previously successfully decoded control channel candidate information.
The previously described embodiments have used an adaptive method based on the channel state of the UE by means of a method for redefining the decoding attempt order according to the change in the channel state. However, every time the decoding attempt order is redefined, if the base station notifies it to the UE with an explicit method of transmitting it by signaling, there is an increase in the overhead caused by the signaling transmission.

Another embodiment proposes a method in which the base station initially transmits a decoding attempt order to the UE, and after the downlink control channel is successfully delivered, the decoding attempt order is redefined according to the previously used control channel candidate. The use of this embodiment has no need for additional signaling transmission for redefining the decoding attempt order.

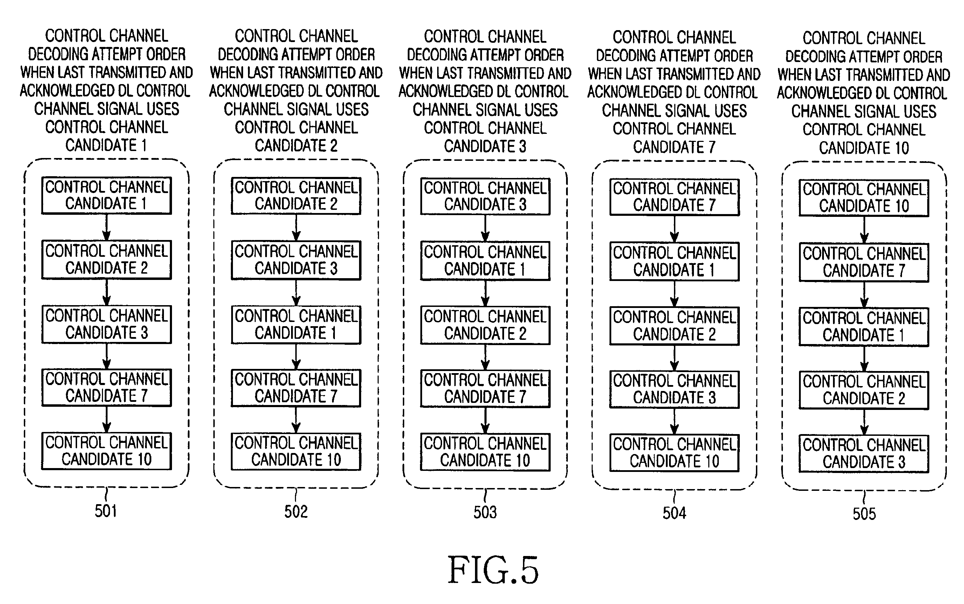

FIG. 5 is a diagram illustrating an embodiment of the present invention. It is assumed herein that for one UE, control channel candidates #1, #2, #3, #7, and #10 are set as a control channel search space.

Reference numeral 501 represents a decoding attempt order for the case where the control channel signal the UE has recently successfully received uses a control channel candidate #1. When the UE has last used the control channel candidate #1, it first makes decoding attempt on the control channel candidate #1. As illustrated in FIG. 1, the control channel candidates #1, #2, and #3 all use only one CE, the control channel candidate #7 uses two CEs, and the control channel candidate #10 uses three CEs. If the UE has last used the control channel candidate #1, the corresponding UE gives a higher decoding attempt priority to the control channel candidates #1, #2 and #3, as compared to the control channel candidates #7 and #10, on the assumption that their channel state is better.

Reference numerals 502 and 503 represent decoding attempt orders for the cases where the last used control channel candidate #2 and control channel candidate #3, respectively, are used and like the example of reference numeral 501, they are characterized by giving the higher decoding attempt priority to the 1-CE control channel candidates.

Below, it is assumed that one UE has set the decoding attempt order 501 as it has successfully received the downlink control channel for which it has last used the control channel candidate #1. However, the base station has transmitted a downlink control channel using the control channel candidate #7, determining that the channel state of the UE has become poor. Then the UE will receive a downlink control channel at a fourth decoding attempt. If the UE has successfully received a control channel of the control channel candidate #7, the next decoding attempt order is set as shown by reference numeral 504, where the highest decoding attempt priority is given to the control channel candidate #7. More specifically, the UE, since it has last made a control channel with two CEs, will have a high probability that it will make a control channel using two CEs like the control channel candidate #7 even in the next control channel if there is no significant change in the channel state.

Reference numeral 505 represents a decoding attempt order in which the highest decoding attempt priority is given to the control channel candidate #10 and the next highest decoding attempt priority is given to the control channel candidates #7, #1, #2, and #3 in order. This decoding attempt order is set when the last used control channel uses the control channel candidate #10. Such an order is set because if the UE has last used three CEs due to the poor channel state, there is a highest probability that it will make a control channel using again three CEs.

The above-described embodiment uses the control channel candidate of the downlink control channel signal last transmitted and acknowledged (ACKed) as a factor for determining the decoding attempt order because only the control channel signal last transmitted and acknowledged becomes a criterion based on which the base station and the UE can recognize each other. Even though the base station has transmitted a control channel signal, if the UE adopts the reception-failed control channel as a criterion, the UE cannot but use the wrong decoding attempt order.

In order to redefine the decoding attempt order without separate signaling, a decoding attempt order decision rule based on the last used control channel candidate should be agreed upon between the base station and the UE. This is a method for setting the rule as a common rule so that all UEs can commonly use it. The use of this method does not need separate signaling for notifying the rule. However, there is a method for notifying the rule in the initial control channel search space setting process in order to uniquely set the rule for each UE. The use of this method increases in the amount of signaling information for the initial control channel search space setting as information related to the rule is added.

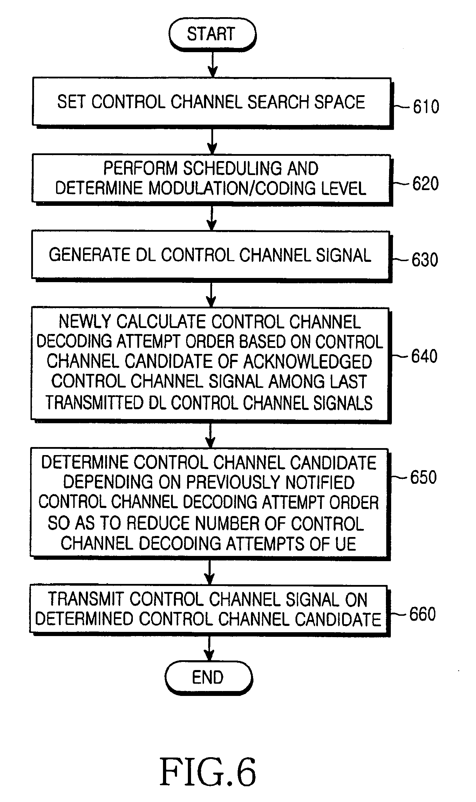

FIG. 6 is a flowchart illustrating a method in which a base station transmits a control channel according to an embodiment of the present invention. Referring to FIG. 6, in step 610, a base station sets a control channel search space to be allocated to a UE. Thereafter, in step 620, the base station determines whether to allocate resources to the UE through scheduling, and determines a modulation/coding level to be used. In step 630, the base station generates a downlink control channel signal according to the result determined in step 620. In step 640, the base station newly calculates a control channel decoding attempt order of a control channel candidate belonging to the control channel search space based on the control channel candidate of an acknowledged (ACKed) control channel signal among the last transmitted downlink control channel signals. In step 650, the base station determines a control channel candidate to be used, taking into account the calculated decoding attempt order, in order to reduce the number of control channel decoding attempts of the UE. In step 660, the base station transmits the generated control channel signal on the determined control channel candidate.

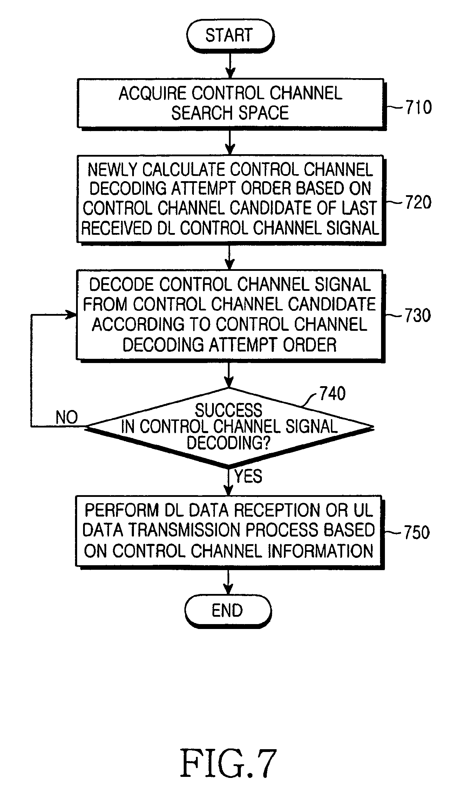

FIG. 7 is a flowchart for a description of a method in which a UE receives a control channel according to an embodiment of the present invention. Referring to FIG. 7, in step 710, a UE acquires control channel search space information. In step 720, the UE newly calculates a control channel decoding attempt order based on the control channel candidate of the last received downlink control channel signal. In step 730, the UE decodes a control channel signal from the control channel candidate according to the calculated control channel decoding attempt order. In step 740, the UE determines if the control channel signal has been successfully decoded. If it is determined in step 740 that the UE has succeeded in the control channel signal decoding, the UE perform in step 750 a downlink data reception or uplink data transmission process based on the control channel information. However, if it is determined in step 740 that the UE has failed in the control channel signal decoding, the UE re-performs step 730.

A description has been given to an exemplary case of redefining only the decoding attempt order according to the last used control channel candidate. However, more flexible management is possible by extending the redefining scope not only to the decoding attempt order but also to the control channel search space. For example, when the last used control channel candidate uses one CE, the control channel search space is defined so that the number of 1-CE control channel candidates is greater in the control channel search space, and when the last used control channel candidate uses three CEs, the control channel search space is defined so that the number of 3-CE control channel candidates is greater in the control channel search space.

The flowcharts for a description of a control channel transmission method in a base station and a control channel reception method in a UE according to this more flexible embodiment of the present invention are equal to the flowcharts of FIGs. 6 and 7, except for steps 640 and 720, so a detailed description thereof will be omitted herein for simplicity. However, in steps 640 and 720, the more flexible embodiment newly calculates the control channel decoding attempt order and redefines the control channel search space.

This embodiment is characterized in that the control channel search space and the decoding attempt order are redefined, but no separate signaling is transmitted. However, for such an operation, the base station and the UE should share the rule for redefining the control channel search space and the decoding attempt order according to the last used control channel candidate. For this, there is a method for setting the rule as a common rule and allowing all UEs to commonly use it. The use of this method has no need for separate signaling for notifying the rule. However, there is a method for notifying the rule in the initial control channel search space setting process in order to uniquely set the rule for each UE. The use of this method increases in the amount of signaling information for the initial control channel search space setting as information related to the rule is added.

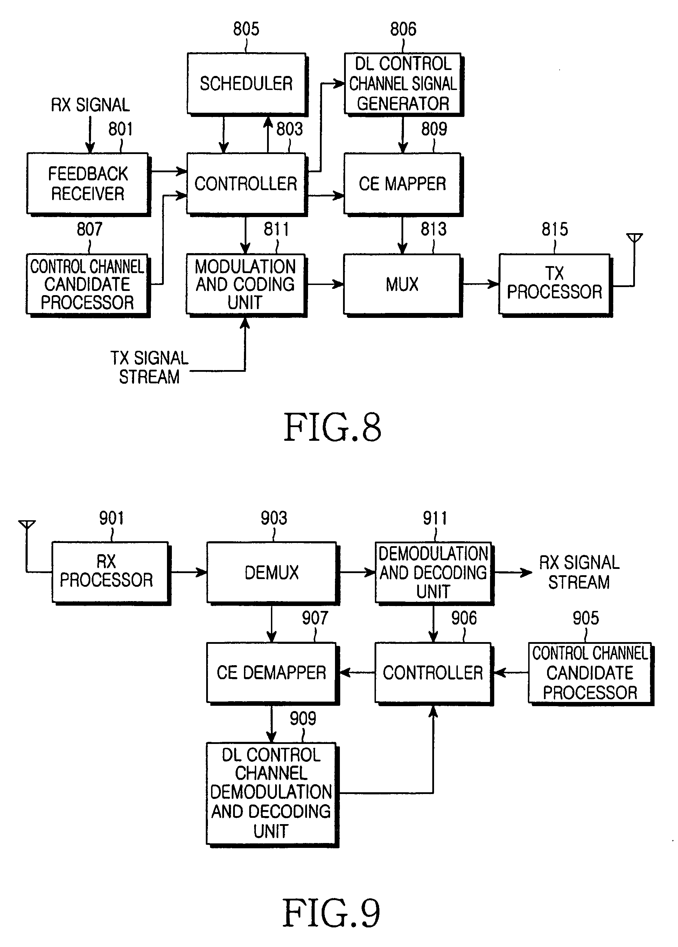

FIG. 8 is a block diagram illustrating a structure of a base station transmitter supporting embodiments of the present invention. Although a transmitter structure for generating a downlink control signal for downlink resource allocation is shown herein, a transmitter structure for generating a downlink control signal for uplink resource allocation can also be provided in the similar manner.

Referring to FIG. 8, a feedback receiver 801 receives a signal transmitted by a UE, and extracts a feedback signal therefrom. Based on the feedback information, the base station determines scheduling, resource allocation, and modulation and coding scheme. A controller 803 analyzes the feedback information to generate the information needed by the scheduler 805, and delivers the generated information to the scheduler 805. Based on the information received from the scheduler 805, the controller 803 determines a modulation and coding method, and notifies it to a modulation and coding unit 811. The scheduler 805 determines resource allocation and notifies it to the controller 803. The modulation and coding unit 811 performs modulation and coding on a signal stream according to the modulation and coding method determined by the controller 803. A downlink control channel signal generator 806 generates a control signal depending on the scheduling, resource allocation, modulation and coding method provided from the controller 803. A control channel candidate processor 807 determines a control channel search space and a decoding attempt order according to the first through third embodiments.

Based on the different embodiments, the control channel search space and the decoding attempt order use the same values until a once-determined update notification is received through signaling, the control channel search space uses the same value but the decoding attempt order is redefined based on a control channel candidate of the control channel the UE has last used and has successfully received, or the control channel search space and the decoding attempt order are redefined every time based on a control channel candidate of the control channel the UE has last used and has successfully received.

After determining the control channel search space and the decoding attempt order in this way, the control channel candidate processor 807 delivers the determined information to the controller 803, and based thereon, the controller 803 determines with which control channel candidate it will make a control channel, and delivers the determined information to a CE mapper 809. The CE mapper 809 performs an operation of arranging modulation symbols of the control signal made by the downlink control channel signal generator 806 in the CE determined by the controller 803. The modulation symbols of the transmission signal generated by the modulation and coding unit 811 and the control channel signal generated by the downlink control channel signal generator 806 are multiplexed by means of a multiplexer 813, processed into transmission waves by means of a transmission processor 815, and then finally transmitted. Herein, the transmission processor 815 includes an apparatus for generating OFDMA or CDMA waves.

FIG. 9 is a block diagram illustrating a structure of a UE receiver supporting embodiments of the present invention. Referring to FIG. 9, a reception processor 901 performs reception processing on a received signal to restore modulation symbols, and outputs the restored modulation symbols to a demultiplexer 903. Then the demultiplexer 903 separates modulation symbols of the transmission signal from a downlink control channel signal. The modulation symbols of the transmission signal are delivered to a demodulation/decoding unit 911, and the downlink control channel signal is delivered to a CE demapper 907. A control channel candidate processor 905 determines control channel candidates and a decoding attempt order according to the same rule as that used in the base station, and delivers the determined information to a controller 906. The controller 906 determines with which control channel candidate the control channel signal has been transmitted, and notifies it to the CE demapper 907. Then the CE demapper 907 selects the control signal symbols transmitted with the corresponding control channel candidate. The controller 906 selects a control channel candidate to be decoded, based on the decoding attempt order, and when a downlink control channel demodulation/decoding unit 909 has failed to successfully perform decoding, the controller 906 selects the next control channel candidate and delivers it to the CE demapper 907, and the CE demapper 907 extracts corresponding control signal symbols and inputs them to the control channel demodulation/decoding unit 909.

This process is repeated until the control channel decoding is successfully performed. If the control information is successfully restored, the restored control information is delivered to the controller 906, and the controller 906 analyzes information for restoring the transmitted signal stream, and delivers the analyzed information to the demodulation/decoding unit 911. The demodulation/decoding unit 911 performs a demodulation and decoding process based on the transmitted analyzed information, to restore the received signal stream. Although the downlink control signal receiver structure for downlink resource allocation is illustrated in FIG. 9, a downlink control signal receiver structure for uplink resource allocation can also be provided in the similar manner.

A description will now be made of embodiments based on the second method for determining downlink channel state information according to the feedback information transmitted from the UE to the base station.

This embodiment provides a method for setting a control channel search space and changing a decoding attempt order in the search space based on a feedback from the UE. Herein, the 'feedback' can be information indicating a decoding attempt order preferred by the UE, or can be a Channel Quality Information (CQI) value the UE reports for scheduling or AMC. Although the two methods are equal in terms of the operation of redefining the decoding attempt order based on the feedback, the former method explicitly provides the information for redefining the decoding attempt order while the latter method corresponds to an implicit method since it determines a decoding attempt order based on the conventional feedback information called CQI. Because CQI is information indicating a channel state of a downlink, a high CQI means a good channel state and a low CQI means a poor channel state. Therefore, when the CQI is high, it is possible to determine the decoding attempt order by giving a higher priority to the candidate that uses a less number of CEs in the control channel search space, and when the CQI is low, it is possible to determine the decoding attempt order by giving a higher priority to the candidate that uses a greater number of CEs in the control channel search space.

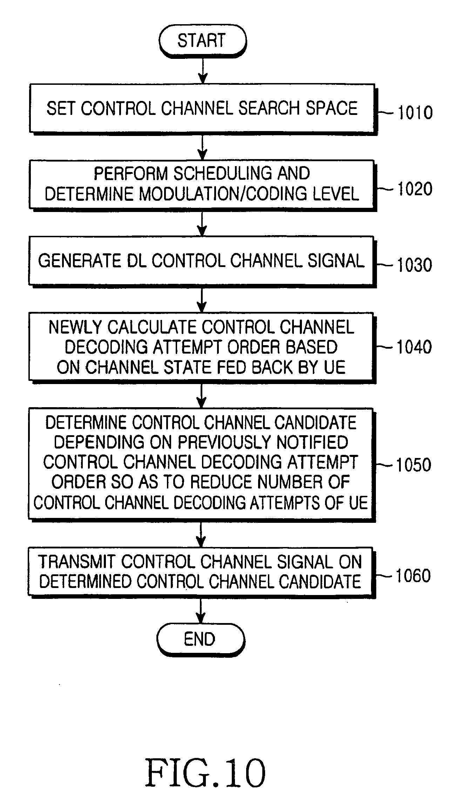

FIG. 10 is a flowchart illustrating a method in which a base station transmits a control channel according to an embodiment of the present invention. More specifically, FIG. 10 illustrates a method for determining the decoding attempt order based on the CQI feedback.

Referring to FIG. 10, in step 1010, a base station sets a control channel search space allocated to a UE. In step 1020, the base station determines to which UE it will allocate resources through scheduling, and determines a modulation/coding level to be used. In step 1030, the base station generates a downlink control channel signal. In step 1040, the base station newly calculates a control channel decoding attempt order based on a CQI value fed back by the UE. In step 1050, the base station determines a control channel candidate to be used, taking into account the calculated decoding attempt order, in order to reduce the number of control channel decoding attempts of the UE. In step 1060, the base station transmits the generated control channel signal on the determined control channel candidate.

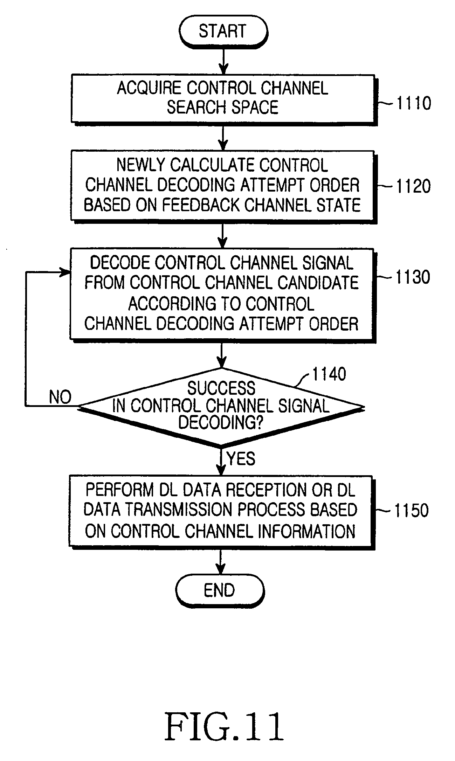

FIG. 11 is a flowchart illustrating an operation in which a UE receives a control channel according to an embodiment of the present invention. More specifically, FIG. 11 illustrates a method for determining a decoding attempt order based on the CQI feedback transmitted by the UE.

Referring to FIG. 11, in step 1110, a UE acquire control channel search space information. In step 1120, the UE newly calculates a control channel decoding attempt order based on the CQI feedback. In step 1130, the UE decodes a control channel signal from the control channel candidate according to the calculated control channel decoding attempt order. In step 1140, the UE determines whether the control channel signal has been successfully decoded. If it is determined in step 1140 that the UE has succeeded in the control channel signal decoding, the UE performs in step 1150 a downlink data reception or uplink data transmission process based on the decoded control channel information. However, if it is determined in step 1140 that the UE has failed in the control channel signal decoding, the UE returns to step 1130.

Although the above-described embodiment has been given to an exemplary case of redefining only the decoding attempt order according to the feedback information, a more flexible management is possible by extending the redefining scope not only to the decoding attempt order but also to the control channel search space. For example, when a high CQI is reported, the embodiment defines the control channel search space such that the number of control channel candidates using a less number of CEs is greater, and when a low CQI is reported, the embodiment descried below defines the control channel search space such that the number of control channel candidates using a greater number of CEs is greater.

The flowcharts for a description of a control channel transmission method in a base station and a control channel reception method in a UE according to this embodiment of the present invention are equal to the flowcharts of FIGs. 10 and 11, except for steps 1040 and 1120, so a detailed description thereof will be omitted herein for simplicity. However, in steps 1040 and 1120, this embodiment newly calculates the control channel decoding attempt order and redefines the control channel search space.

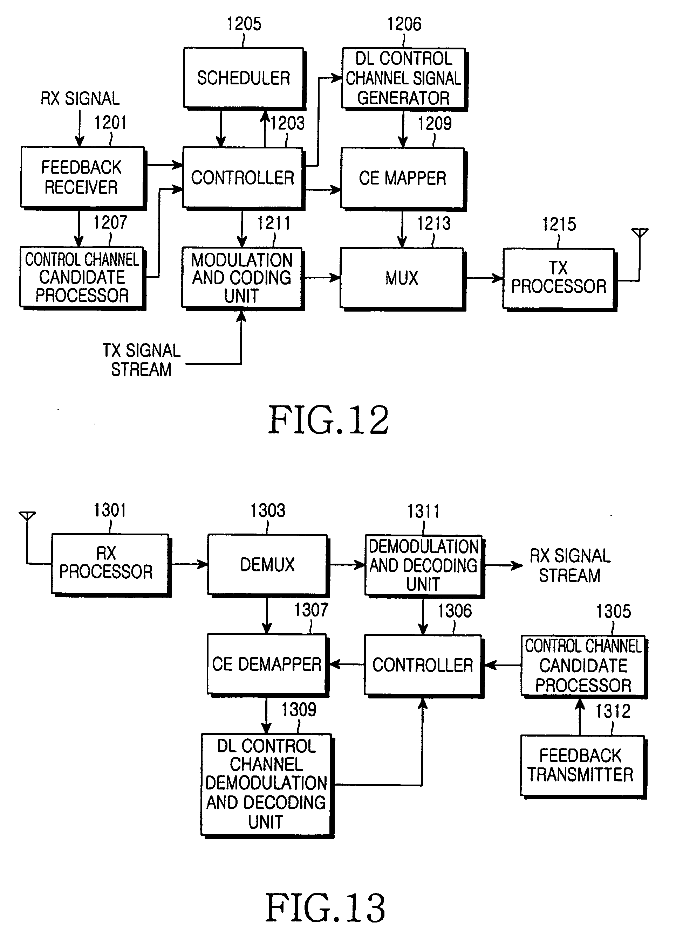

FIG. 12 is a block diagram illustrating a structure of a base station transmitter supporting embodiments of the present invention. FIG. 12 is equal in operation to FIG. 8 except for the fact that the feedback information such as CQI restored in a feedback receiver 1201 is delivered to a control channel candidate processor 1207, and then used for redefining the control channel search space and the decoding attempt order, so a detailed description thereof will be omitted herein for simplicity.

FIG. 13 is a block diagram illustrating a structure of a UE receiver supporting embodiments of the present invention. FIG. 13 is equal in operation to FIG. 9 except for the fact that the information such as CQI fed back from a feedback transmitter 1351 is delivered to a control channel candidate processor 1305, and then used for redefining the control channel search space and the decoding attempt order, so a detailed description thereof will be omitted herein for simplicity.

As is apparent from the foregoing description, the present invention contributes to a reduction in the average number of decoding attempts though it does not reduce the maximum number of decoding attempts on the downlink control channels. In addition, the present invention can solve the problem that the prior art should reduce the size of the control channel search space in order to reduce the number of decoding attempts.

While the present invention has been shown and described with reference to certain preferred embodiments thereof, it will be understood by those skilled in the art that various changes in form and details may be made therein without departing from the spirit and scope of the present invention as defined by the appended claims.

## Claims

1. A method for transmitting a control channel by a base station in a mobile communication system, the method comprising:
allocating resources to a User Equipment (UE) through scheduling;
generating a downlink control channel signal;
calculating a control channel decoding attempt order according to a state of the downlink channel;
determining a control channel candidate to be used, according to the calculated decoding attempt order; and
transmitting the generated control channel signal in the determined control channel candidate.

2. The method of claim 1, wherein determining a control channel candidate comprises:
calculating a second control channel decoding attempt order based on a control channel candidate of an acknowledged control channel signal among the downlink control channel signals last transmitted to the UE.

3. The method of claim 1, wherein determining a control channel candidate comprises:
calculating a second control channel decoding attempt order based on feedback information from the UE.

4. The method of claim 3, wherein the feedback information includes at least one of a decoding attempt order preferred by the UE and Channel Quality Information (CQI) information.

5. The method of claim 3, wherein calculating the second control channel decoding attempt order further comprises:
redefining a control channel search space including more than one control channel candidate allocated to the UE.

6. A method for receiving a control channel by a User Equipment (UE) in a mobile communication system, the method comprising:
calculating a control channel decoding attempt order according to a state of a downlink channel; and
decoding a control channel signal from a control channel candidate according to the calculated control channel decoding attempt order.

7. The method of claim 6, wherein the control channel decoding attempt order is calculated based on a control channel candidate of a last received downlink control channel signal.

8. The method of claim 6, wherein the control channel decoding attempt order is calculated based on feedback information transmitted to a base station.

9. The method of claim 8, wherein the feedback information includes at least one of a decoding attempt order preferred by the UE and Channel Quality Information (CQI) information.

10. The method of claim 6, wherein calculating the control channel decoding attempt order comprises:
redefining a control channel search space including more than one control channel candidate allocated to the UE.

11. An apparatus for transmitting a control channel of a base station in a mobile communication system, the apparatus comprising:
a downlink control channel signal generator for generating a downlink control channel signal to be transmitted to a User Equipment (UE);
a control channel candidate processor for calculating a control channel decoding attempt order according to a state of the downlink channel;
a controller for determining a control channel candidate to be used, according to the calculated decoding attempt order;
a mapper for mapping the generated control channel signal to the determined control channel candidate; and
a transmission processor for wirelessly transmitting the mapped signal.

12. The apparatus of claim 11, wherein the control channel candidate processor calculates the control channel decoding attempt order based on a control channel candidate of an acknowledged control channel signal among downlink control channel signals last transmitted to the UE.

13. The apparatus of claim 11, wherein the control channel candidate processor calculates the control channel decoding attempt order based on feedback information from the UE.

14. The apparatus of claim 13, wherein the feedback information comprises at least one of a decoding attempt order preferred by the UE and Channel Quality Information (CQI) information.

15. The apparatus of claim 13, wherein the control channel candidate processor redefines a control channel search space including more than one control channel candidate allocated to the UE.

16. An apparatus for receiving a control channel of a User Equipment (UE) in a mobile communication system, the apparatus comprising:
a control channel candidate processor for calculating a control channel decoding attempt order according to a state of a downlink channel;
a reception processor for processing a wirelessly received signal to restore modulation symbols; and
a downlink control channel demodulation and decoding unit for decoding a control channel signal from a wirelessly received control channel candidate according to the calculated control channel decoding attempt order.

17. The apparatus of claim 16, wherein the control channel candidate processor calculates the control channel decoding attempt order based on a control channel candidate of a last received downlink control channel signal.

18. The apparatus of claim 16, wherein the control channel candidate processor calculates the control channel decoding attempt order based on feedback information transmitted to a base station.

19. The apparatus of claim 18, wherein the feedback information comprises at least one of a decoding attempt order preferred by the UE and Channel Quality Information (CQI) information.

20. The apparatus of claim 19, wherein the control channel candidate processor redefines a control channel search space including more than one control channel candidate allocated to the UE.
